# FASCICULE DE BREVET EUROPEEN

(11) **EP 3 991 503 B1**
(45) Date de publication et mention de la délivrance du brevet: **13.11.2024**
(21) Numéro de dépôt: 20730654.9
(22) Date de dépôt: 09.06.2020
(51) Int. Cl.: H04W 74/00

(54) **PROCÉDÉ D'ACCÈS À UN RÉSEAU DE COMMUNICATION, PROCÉDÉ D'ATTACHEMENT, TERMINAL, STATION DE BASE ET PROGRAMMES D'ORDINATEUR CORRESPONDANTS**
VERFAHREN ZUM ZUGRIFF AUF EIN KOMMUNIKATIONSNETZWERK, VERBINDUNGSVERFAHREN, ENDGERÄT, BASISSTATION UND ENTSPRECHENDE COMPUTERPROGRAMME
METHOD FOR ACCESSING A COMMUNICATION NETWORK, ASSOCIATION METHOD, TERMINAL, BASE STATION AND CORRESPONDING COMPUTER PROGRAMS

(30) Priorité: 28.06.2019 FR 1907077
(43) Date de publication de la demande: 04.05.2022
(60) Demande divisionnaire: 24202458.6
(73) Titulaire: Orange, 92130 Issy-les-Moulineaux (FR)
(72) Inventeur: LIN, Hao, 92326 CHÂTILLON CEDEX (FR)
(74) Mandataire: Vidon Brevets & Stratégie
(86) Numéro de dépôt international: PCT/EP2020/065894
(87) Numéro de publication internationale: WO 2020/260002

(56) Documents cités:
- WO-A1-2008/097030
- WO-A1-2018/127240
- CN-A- 108 076 532
- US-A1- 2018 103 465
- US-A1- 2019 335 515

## Description

### 1. Domaine de l'invention

Le domaine de l'invention est celui des communications numériques.

Plus précisément, l'invention concerne la phase d'attachement d'un terminal à un réseau de communication. Elle propose notamment une solution d'accès rapide au réseau, par exemple pour des applications de type messagerie instantanée.

L'invention trouve notamment, mais non exclusivement, des applications dans le domaine de la LTE (en anglais « Long Term Evolution ») ou de la 5G.

### 2. Art antérieur

Classiquement, pour qu'un terminal puisse communiquer avec un autre dans un réseau de communication, deux phases sont mises en oeuvre : une phase d'attachement au réseau de communication, au cours de laquelle un terminal est identifié, synchronisé avec le réseau et configuré, et une phase de communication, au cours de laquelle le terminal peut échanger des données utiles avec le réseau et/ou un autre terminal attaché au réseau.

A titre d'exemple, selon la norme LTE, une procédure d'accès aléatoire basée sur l'utilisation du canal RACH (en anglais « Random Accès Channel », en français « canal à accès aléatoire »), dite procédure RACH, est mise en oeuvre afin de pouvoir attacher un terminal au réseau. Un tel canal est « à accès aléatoire » car, du point de vue du réseau, il est difficile de savoir à quel moment un terminal va chercher à se connecter au réseau.

Les principaux objectifs de la procédure RACH sont d'assurer la synchronisation du terminal et de la station de base (par exemple l'eNB selon la norme LTE) en liaison montante et d'identifier le terminal, afin que le réseau puisse le connaître et le configurer.

La synchronisation de la station de base et du terminal en liaison descendante peut quant à elle être assurée par la diffusion périodique d'informations système portant des informations de synchronisation.

On décrit ci-après les principales étapes de la procédure RACH.

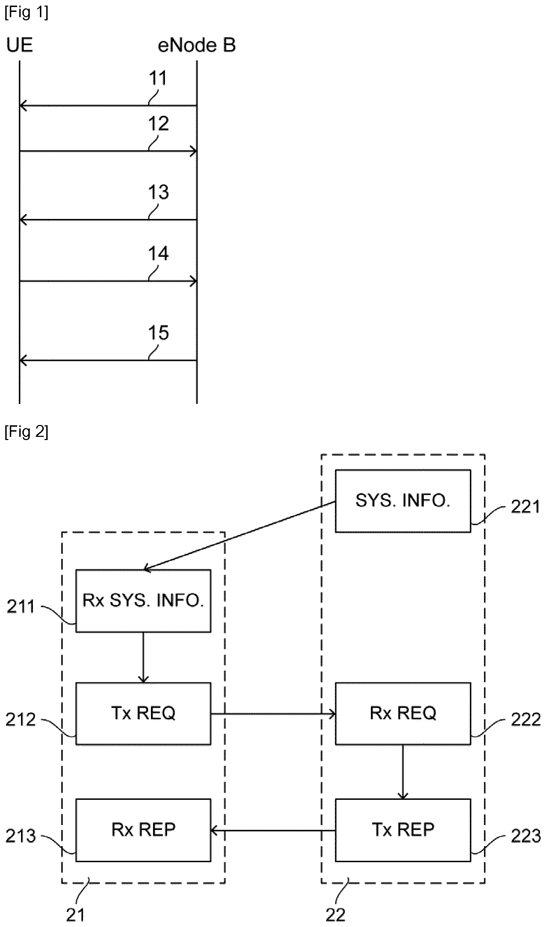

Comme illustré en figure 1, lorsque le terminal UE sort du mode veille ou entre dans une zone de couverture d'une station de base, eNodeB par exemple, il reçoit des informations système 11, diffusées régulièrement dans le réseau par une entité du réseau, par exemple la station de base eNodeB. De telles informations identifient notamment au moins une ressource temps-fréquence, appelée ressource RACH, destinée à être utilisée par le terminal pour la procédure RACH.

A réception de ces informations système, le terminal UE sélectionne aléatoirement un préambule dans un groupe de préambules disponibles, et transmet, sur la ressource RACH, un premier message 12 portant ce préambule, un identifiant, noté RA-RNTI (en anglais « Random Access - Radio Network Temporary identifier »), associé à la ressource RACH et donc connu du réseau, ainsi qu'une éventuelle indication sur le volume à prévoir pour la transmission de données. L'identifiant RA-RNTI peut notamment être utilisé pour détecter les erreurs de transmission (CRC ou « Cyclic Redundancy Check »).

Comme le réseau n'a pas encore identifié le terminal, le réseau (ou plus précisément une entité du réseau, par exemple la station de base) répond par un deuxième message 13, noté RAR (en anglais « Random Access Response »), portant l'identifiant du préambule reçu sur la ressource RACH, noté PID (en anglais « Preamble ID »), une estimation d'un décalage temporel à appliquer pour l'émission d'un message par le terminal, tenant compte du temps de trajet entre le terminal et la station de base, noté TA (en anglais « Timing Advance »), un identifiant temporaire d'accès au réseau, noté TC-RNTI (en anglais « Temporary Cell Radio Network Temporary Identifier »), et une indication des ressources allouées pour les communications sur voie montante, notées « UL grant ». Ces différents paramètres peuvent être encapsulés dans des paquets et transmis sur la couche MAC. En particulier, de tels paquets peuvent être codés en utilisant l'identifiant RA-RNTI, associé à la ressource RACH et donc connu du réseau. De cette façon, seul le terminal ayant transmis le premier message 12 sur la ressource RACH peut décoder ces paquets.

A réception de ces paquets, le terminal peut donc les décoder, et vérifier si l'identifiant PID correspond bien au préambule qu'il a sélectionné et transmis dans le premier message 12. Si c'est le cas, il peut continuer à décoder les différents paramètres. Sinon, il peut interrompre le décodage.

Lorsque le terminal a vérifié que l'identifiant PID reçu correspond bien au préambule transmis, il sait que le réseau a correctement reçu le premier message 12 avec le préambule. Il peut donc ajuster son instant d'émission en tenant compte du paramètre TA, et transmettre son identifiant U E_I D dans un troisième message 14, sur les ressources allouées pour les communications sur voie montante « UL grant ». L'identifiant UE_ID est par exemple le numéro IMSI (en anglais « International Mobile Subscriber identifier ») de la carte SIM du terminal. En particulier, ce troisième message 14 peut être codé en utilisant un identifiant temporaire TC-RNTI généré par la station de base.

A réception de cette requête, la station de base peut envoyer un quatrième message 15 au terminal, de façon à résoudre les éventuels problèmes de collision. Ce message porte l'identifiant du terminal UE_ID.

Si cet identifiant du terminal UE_ID est identique à celui transmis dans le troisième message, cela signifie que le terminal est connu du réseau. Le terminal peut alors changer l'identifiant temporaire TC-RNTI en C-RNTI (en anglais « Cell RNTI »), qui est un identifiant spécifique utilisé par le terminal pendant la phase de communication avec le réseau, après la phase d'attachement, par exemple comme CRC pour détecter des erreurs de transmission.

Sinon, cela signifie que le terminal n'est pas connu du réseau. Le terminal doit alors recommencer la procédure RACH.

A l'issue de la procédure RACH, la station de base connaît donc l'identité UE_ID du terminal. En revanche, celui-ci ne peut pas encore transmettre des données utiles (i.e. commencer la phase de communication) tant que le réseau n'a pas configuré le terminal en mettant par exemple en oeuvre un protocole de contrôle de ressources radio de type RRC (en anglais « radio ressource control »). Cette configuration est nécessaire pour que le terminal utilise efficacement le lien radioélectrique fourni par la station de base.

Les procédures RACH et RRC sont donc particulièrement utiles pour l'accès au réseau et la configuration du terminal.

Toutefois, un inconvénient de ces techniques est qu'elles doivent être mises en oeuvre à chaque fois que le terminal souhaite accéder au réseau, par exemple lorsque le terminal sort d'un mode veille ou bascule sur une nouvelle cellule d'un réseau cellulaire (« handover »). Or de telles techniques sont assez longues à mettre en oeuvre et coûteuses en terme de ressources.

En particulier, lorsque la phase de communication est de courte durée, par exemple lorsque le terminal émet des messages de type messagerie instantanée (SMS, MMS, tchat, émission d'un message via une application de type Facebook, Whatsapp, Twitter - marques déposées - par exemple), la phase d'attachement au réseau peut être plus coûteuse en temps et/ou en ressource que la phase de communication. En effet, de tels messages instantanés présentent généralement une petite taille, de l'ordre de quelques octets ou kilooctets, et le coût de la phase d'attachement devient non négligeable par rapport au coût de la phase de communication. Un autre exemple peut être trouvé dans les documents de brevet CN108 076532 A (BEIJING XINWEI TELECOM) et US 2018/103465.

Il existe donc un besoin pour une nouvelle technique d'accès au réseau, qui soit simple à mettre en oeuvre et peu coûteuse en temps et/ou en ressource.

### 3. Exposé de l'invention

L'invention est définie par les revendications indépendantes annexées et d'autres modes de réalisation sont décrits par les revendications dépendantes.

L'invention propose, selon au moins un mode de réalisation, un procédé d'accès à un réseau de communication, mis en oeuvre par un terminal.

Selon l'invention, un tel procédé comprend :
- la réception d'informations système diffusées par ledit réseau, les informations système comprenant une identification d'au moins une ressource temps-fréquence apte à porter une information relative à un identifiant unique de terminal,
   la transmission au réseau d'une requête d'accès, ladite requête d'accès portant une première information représentative d'un identifiant unique dudit terminal, transmise sur au moins une desdites ressources temps-fréquence identifiées à partir desdites informations système, dite ressource spécifique,
- l'autorisation d'accès audit réseau en cas de réception d'une réponse à ladite requête d'accès portant une deuxième information représentative de l'identifiant unique dudit terminal.

La solution proposée permet ainsi d'identifier, dans les informations système diffusées dans le réseau, une ou plusieurs ressources temps-fréquence spécifiques, que le terminal va pouvoir utiliser dès son premier envoi vers le réseau pour transmettre son identifiant unique, qui peut être son identifiant couche physique, son identifiant IMSI, ou tout autre identifiant unique, tel que par exemple son identifiant MSISDN (en anglais « Mobile Station ISDN Number »).

Ainsi, la procédure d'accès au réseau selon au moins un mode de réalisation l'invention est simplifiée par rapport à l'art antérieur, puisqu'elle repose sur l'échange de deux principaux messages (une requête d'accès portant un identifiant unique du terminal, et une réponse à la requête), alors qu'elle repose sur l'échange de quatre principaux messages selon l'art antérieur tel que décrit en relation avec la figure 1.

Du fait du nombre limité de messages échangés, la procédure d'accès au réseau selon au moins un mode de réalisation de l'invention est également plus rapide que la procédure RACH décrite en relation avec l'art antérieur et permet d'optimiser l'efficacité spectrale pendant la procédure d'accès.

On note qu'une telle procédure d'accès doit être mise en oeuvre à chaque fois que le terminal quitte le réseau (par exemple parce qu'il entre en mode veille) et souhaite à nouveau « entrer » dans le réseau (par exemple parce qu'il sort du mode veille). Il est donc souhaitable de simplifier et d'accélérer la procédure d'accès.

En particulier l'accès au réseau est autorisé si une réponse à la requête d'accès est reçue, et si cette réponse porte une deuxième information représentative de l'identifiant unique du terminal. Par exemple, les première et deuxième informations représentatives de l'identifiant unique du terminal sont identiques, ou corrélés. Ces première et deuxième informations permettent d'identifier le même terminal.

Selon un premier mode de réalisation, la première information représentative de l'identifiant unique du terminal peut être transmise dans une ressource dédiée, notée TFR, identifiée à partir des informations système.

Selon un deuxième mode de réalisation, la première information représentative de l'identifiant unique du terminal peut être transmise dans une ressource classiquement utilisée pour l'accès canal, par exemple la ressource RACH. Selon ce deuxième mode de réalisation, le réseau peut réserver une plus grande ressource temps-fréquence pour la transmission de la première information représentative de l'identifiant unique et des informations classiques pour l'accès au canal.

Selon un mode de réalisation particulier, ladite requête d'accès porte également un message utile destiné à être transmis à au moins un autre terminal. En particulier, le message utile est transmis avec la première information représentative d'un identifiant unique du terminal sur la ressource temps-fréquence spécifique, ou sur une autre ressource temps-fréquence apte à porter un message utile identifiée dans les informations système.

La solution proposée permet ainsi la transmission de messages utiles du terminal vers le réseau pendant la procédure d'accès, i.e. sans nécessiter la configuration préalable du terminal (reposant par exemple sur la mise en oeuvre d'un protocole de contrôle de ressources radio de type RRC).

En particulier, la solution proposée permet d'améliorer l'efficacité spectrale du réseau, notamment lorsque le terminal envoie des messages avec une application de type messagerie instantanée (SMS, MMS, tchat, Facebook, Twitter, Whatsapp - marques déposées, etc).

On note à cet égard que l'identifiant unique du terminal permet, entre autres, l'identification de l'émetteur d'un message utile via une application de type réseau social. Il s'agit donc d'un identifiant au niveau applicatif.

Selon un mode de réalisation particulier, les informations système identifient au moins deux ressources temps-fréquence aptes à porter le message utile. Selon ce mode de réalisation, le procédé met en oeuvre la sélection d'au moins une des ressources temps-fréquence en tenant compte de la taille du message utile destiné à être transmis à au moins un autre terminal. Dans ce cas, le message utile peut être transmis sur la ressource sélectionnée.

Par exemple, les informations système identifient une première ressource pour la transmission de messages utiles présentant une taille de l'ordre de quelques bits, notée TFR1, une deuxième ressource pour la transmission de messages de quelques octets, note TFR2, et une troisième ressource pour la transmission de messages de quelques kilooctets, notée TFR3.

On optimise ainsi l'utilisation des ressources temps-fréquence, en les adaptant à la taille du message utile.

Selon un mode de réalisation particulier, la première information représentative de l'identifiant unique dudit terminal et/ou le message utile sont transmis au réseau en tenant compte d'une information de modulation et codage associée à la ressource temps-fréquence spécifique sélectionnée pour la transmission. Une telle information de modulation et codage est obtenue à partir des informations système.

De cette façon, le terminal a connaissance des schémas de modulation et codage (MCS, en anglais « Modulation and Coding Scheme ») à utiliser dans le réseau, notamment pour la transmission de données utiles, dès le début de la procédure d'accès.

Selon un mode de réalisation particulier, l'identifiant unique du terminal est un nombre entier, et la transmission transmet également un signal de référence obtenu en appliquant un décalage cyclique à une séquence de base prédéfinie. Un tel décalage cyclique peut être déterminé en fonction de l'identifiant unique du terminal.

Le signal de référence transmis du terminal vers le réseau ne porte donc pas une séquence de base classique, mais une version modifiée de cette séquence (décalée cycliquement) permettant de transmettre l'identifiant unique du terminal, ou une partie de cet identifiant, directement dans le signal de référence.

On optimise ainsi le débit de transmission, en réduisant la quantité de bits nécessaire pour transmettre l'identifiant unique du terminal.

Par exemple, le signal de référence est de type signal de référence de démodulation (DMRS, en anglais « DeModulation Référence Signal »). La séquence de base peut quant à elle être définie pour le réseau, normalisée, ou autre. Il s'agit d'une séquence connue du terminal et d'au moins une entité du réseau, par exemple une station de base.

En particulier, lorsque l'identifiant unique du terminal est supérieur à un nombre maximal de décalages cycliques, la première information représentative de l'identifiant unique du terminal comprend la partie entière du rapport entre l'identifiant unique et le nombre maximal de décalages cycliques, également appelée valeur restante. Le nombre maximal de décalages cycliques peut notamment être obtenu à partir des informations système.

De cette façon, la quantité de bits nécessaire pour transmettre la première information représentative de l'identifiant unique du terminal est faible.

Par exemple, le nombre maximal de décalages cycliques est égal à la longueur de ladite séquence de base.

En variante, le terminal peut transmettre directement son identifiant unique au réseau.

Selon un mode de réalisation particulier, la requête d'accès porte également un préambule sélectionné parmi une pluralité de préambules, transmis sur la ressource temps-fréquence spécifique ou sur une ressource temps-fréquence apte à porter le préambule (par exemple la ressource RACH) identifiée à partir desdites informations système. Selon ce mode de réalisation, l'autorisation d'accès au réseau est accordée lorsque la réponse à la requête d'accès porte la deuxième information représentative de l'identifiant unique du terminal et une information représentative du préambule sélectionné.

Une ressource temps-fréquence dédiée à la transmission du préambule est également appelée « RACH occasion ». Par exemple, une telle ressource « RACH occasion » est associée à une ou plusieurs ressources temps-fréquence aptes à porter un message utile.

Selon un mode de réalisation particulier, la requête d'accès porte également au moins un indicateur indiquant un retour au mode veille du terminal suite à l'autorisation d'accès au réseau.

Par exemple, une partie de la ressource temps-fréquence spécifique est réservée pour la transmission d'un tel indicateur. En variante, une partie d'une ressource temps-fréquence dédiée à la transmission d'un préambule est réservée pour la transmission d'un tel indicateur. En variante, au moins deux types de préambule sont définis, un premier type de préambule à utiliser lorsque le terminal souhaite passer en mode veille après avoir accédé au canal, un deuxième type de préambule à utiliser lorsque le terminal souhaite poursuivre la procédure de configuration après avoir accédé au canal. Selon cette variante, l'indicateur est donc le type du préambule sélectionné.

Un tel indicateur peut notamment être utilisé par une entité du réseau pour détecter la transmission d'un message de type messagerie instantané, pour lequel le terminal souhaite repasser en mode veille après l'émission du message utile.

En particulier, lorsque le terminal a reçu une réponse à la requête d'accès et que l'accès au réseau est autorisé, le terminal peut passer en mode veille. De cette façon, on limite la consommation en énergie du terminal émetteur de la requête d'accès.

En variante, lorsque l'accès au réseau est autorisé, le terminal peut rester en mode actif.

Par exemple, si la requête d'accès ne porte pas de message utile, ledit procédé met en oeuvre une phase de configuration dudit terminal avec ledit réseau.

En effet, si la requête d'accès porte la première information relative à l'identifiant unique du terminal, mais ne porte pas de message utile, c'est que le terminal utilise la solution proposée pour accéder rapidement au réseau. Dans ce cas, le terminal ne souhaite pas retourner en mode veille lorsque l'accès au réseau lui a été autorisé.

Selon un mode de réalisation particulier, en cas de réception d'une réponse à ladite requête d'accès ne portant pas de deuxième information représentative de l'identifiant unique dudit terminal, ledit procédé comprend la retransmission de ladite requête d'accès, ladite première information représentative de l'identifiant unique dudit terminal étant transmise sur une nouvelle ressource temps-fréquence spécifique identifiée dans ladite réponse.

Ce mode de réalisation particulier peut notamment être mis en oeuvre lorsqu'une entité du réseau, par exemple la station de base, peut décoder le préambule de la requête d'accès transmis sur une ressource temps-fréquence dédiée, mais ne peut pas décoder le message utile et/ou la première information représentative de l'identifiant unique du terminal de la requête d'accès transmis sur une ressource temps-fréquence spécifique.

Selon ce mode de réalisation, plutôt que recommencer entièrement la procédure d'accès, il est possible d'allouer au terminal une nouvelle ressource spécifique pour la transmission de la première information représentative de l'identifiant unique du terminal, et éventuellement du message utile.

De plus, comme la station de base indique au terminal la nouvelle ressource à utiliser pour la transmission de la première information représentative de l'identifiant unique du terminal, et éventuellement du message utile, le risque de collision avec des requêtes d'accès émises par d'autres terminaux est limité.

Selon une caractéristique particulière, en cas de non réception de réponse à la requête d'accès à l'issue d'un intervalle de temps prédéterminé, ledit procédé comprend la retransmission de ladite requête d'accès.

En d'autres termes, suite à la transmission de la requête d'accès, le terminal reste à l'écoute pendant une durée prédéterminée, notée fenêtre RAR (en anglais « RAR window »). S'il n'a pas reçu de réponse à sa requête d'accès à l'issue de cette durée, il peut retransmettre la requête d'accès, éventuellement en utilisant d'autres ressources temps-fréquence.

Dans un autre mode de réalisation, l'invention concerne un terminal correspondant.

Un tel terminal est notamment adapté à mettre en oeuvre le procédé d'accès décrit précédemment. Il s'agit par exemple d'un équipement utilisateur comme un téléphone portable. Ce terminal pourra bien sûr comporter les différentes caractéristiques relatives au procédé selon l'invention, qui peuvent être combinées ou prises isolément. Ainsi, les caractéristiques et avantages de ce terminal sont les mêmes que ceux du procédé décrit précédemment. Par conséquent, ils ne sont pas détaillés plus amplement.

L'invention concerne également, selon un mode de réalisation, un procédé d'attachement d'un terminal à un réseau de communication. En particulier, un tel procédé est mis en oeuvre au niveau d'une entité du réseau, par exemple une station de base.

Selon l'invention, un tel procédé comprend :
- la diffusion d'informations système par ledit réseau, les informations système comprenant une identification d'au moins une ressource temps-fréquence apte à porter une information relative à un identifiant unique de terminal,
   la vérification de la réception, sur au moins une desdites ressources temps-fréquence identifiées à partir des informations système, dite ressource spécifique, d'une première information représentative d'un identifiant unique du terminal portée par une requête d'accès audit réseau ;
- si ladite première information représentative d'un identifiant unique dudit terminal est reçue, la transmission audit terminal d'une réponse à ladite requête d'accès, portant une deuxième information représentative de l'identifiant unique dudit terminal.

Un tel procédé est notamment adapté à recevoir une requête d'accès émise par un terminal, selon le procédé d'accès au réseau décrit précédemment.

Comme déjà indiqué, selon au moins un mode de réalisation, il permet à un terminal d'accéder rapidement au réseau.

Selon un mode de réalisation particulier, ladite vérification vérifie également la réception, sur la ressource temps-fréquence spécifique utilisée pour la transmission de la première information représentative de l'identifiant unique du terminal ou sur une autre ressource temps-fréquence apte à porter un message utile, identifiée à partir desdites informations système, d'un message utile destiné à être transmis à au moins un autre terminal.

Le procédé comprend également la transmission dudit message utile audit au moins un autre terminal si ladite première information représentative d'un identifiant unique dudit terminal et ledit message utile sont reçus.

Le procédé selon ce mode de réalisation permet ainsi d'optimiser l'efficacité spectrale du réseau.

Selon un mode de réalisation particulier, l'identifiant unique du terminal étant un nombre entier et un signal de référence obtenu en appliquant un décalage cyclique à une séquence de base prédéfinie étant reçu sur la ressource temps-fréquence spécifique, ledit procédé met en oeuvre une étape de détermination de l'identifiant unique dudit terminal.

Pour ce faire, connaissant la séquence de base et ayant reçu le signal de référence, il est en effet possible de déterminer le nombre de décalages apportés à la séquence de base, et donc l'identifiant unique du terminal.

Selon un mode de réalisation particulier, le procédé comprend également :
- la vérification de la réception, sur ladite ressource temps-fréquence ou sur au moins une ressource temps-fréquence apte à porter un préambule, identifiée à partir des informations système, d'un préambule porté par la requête d'accès,
- si ledit préambule est reçu, et que ladite première information représentative d'un identifiant unique dudit terminal n'est pas reçue, la transmission audit terminal d'une réponse à ladite requête d'accès portant une information représentative dudit préambule et identifiant une nouvelle ressource temps-fréquence spécifique (i.e. pour la transmission de ladite première information et éventuellement du message utile).

Dans un autre mode de réalisation, l'invention concerne une station de base correspondante.

Une telle station de base est notamment adaptée à mettre en oeuvre le procédé d'attachement décrit précédemment. Il s'agit par exemple d'un eNodeB selon la norme LTE, ou gNB selon la 5G. La station de base pourra bien sûr comporter les différentes caractéristiques relatives au procédé selon l'invention, qui peuvent être combinées ou prises isolément. Ainsi, les caractéristiques et avantages de la station de base sont les mêmes que ceux du procédé décrit précédemment. Par conséquent, ils ne sont pas détaillés plus amplement.

L'invention concerne encore un ou plusieurs programmes d'ordinateur comportant des instructions pour la mise en oeuvre d'au moins un procédé tel que décrit ci-dessus lorsque ce ou ces programmes sont exécutés par au moins un processeur.

L'invention concerne aussi un support d'informations lisible par un ordinateur, et comportant des instructions d'un programme d'ordinateur tel que mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[Fig 1] La figure 1 illustre les principales étapes de la procédure RACH selon l'art antérieur ;
[Fig 2] La figure 2 illustre les principales étapes mises en oeuvre par un terminal et une station de base selon un mode de réalisation de l'invention ;
[Fig 3] La figure 3 illustre l'utilisation d'une ressource temps-fréquence spécifique selon un mode de réalisation de l'invention ;
[Fig 4] La figure 4 présente des exemples de décalage cyclique appliqué à une séquence de base ;
[Fig 5] La figure 5 illustre les messages échangés entre un terminal et une station de base selon un premier exemple ;
[Fig 6] La figure 6 illustre les messages échangés entre un terminal et une station de base selon un deuxième exemple ;
[Fig 7] La figure 7 présente la structure simplifiée d'un terminal mettant en oeuvre un procédé d'accès à un réseau selon un mode de réalisation de l'invention ;
[Fig 8] La figure 8 présente la structure simplifiée d'une station de base mettant en oeuvre un procédé d'attachement à un réseau selon un mode de réalisation de l'invention.

### 5. Description d'un mode de réalisation de l'invention

### 5.1 Principe général

Le principe général de l'invention repose sur une nouvelle technique permettant à un terminal de s'attacher simplement et rapidement à un réseau. Pour ce faire, les informations système classiquement diffusées par le réseau sont modifiées pour identifier au moins une ressource temps-fréquence apte à transmettre une information relative à un identifiant unique de terminal vers le réseau. De telles ressources ne sont donc pas réservées pour un terminal particulier, mais peuvent être utilisées par n'importe quel terminal souhaitant accéder au réseau.

En particulier, le réseau peut réserver une ressource temps-fréquence plus grande que la ressource RACH classiquement réservée pour la procédure RACH, pour que le terminal puisse transmettre son identifiant unique (ou plus généralement une première information représentative de son identifiant unique) avec les informations classiquement transmises sur la ressource RACH.

En variante, le réseau peut réserver une ressource temps-fréquence distincte pour que le terminal puisse transmettre au moins une première information représentative de son identifiant unique.

Un terminal souhaitant accéder au réseau peut ainsi directement transmettre au réseau (i.e. à au moins une entité du réseau, par exemple une station de base), au niveau de la couche physique, son identifiant unique, ainsi qu'éventuellement un message utile destiné à un autre terminal, sur au moins une ressource temps-fréquence spécifique réservée par le réseau.

Selon les informations reçues, le réseau peut envoyer une réponse au terminal. L'échange de ces deux principaux messages (une requête d'accès et une réponse à la requête d'accès) entre le terminal et le réseau est suffisant pour autoriser le terminal à accéder ou non au réseau.

Le terminal peut ensuite retourner en mode veille ou rester en mode actif et continuer la procédure de configuration.

En particulier, si l'on se place dans le contexte d'une application de type messagerie instantanée, selon laquelle le terminal envoie un ou plusieurs messages courts, le terminal peut accéder au réseau et transmettre un message court via l'échange de ces deux principaux messages, sans nécessité la mise en oeuvre d'une procédure de configuration du terminal (de type RCC par exemple), et peut repasser en mode veille après chaque envoi, s'il ne souhaite pas poursuivre par une phase de communication, ou rester en mode actif, par exemple si plusieurs messages doivent être transmis.

On présente ci-après, en relation avec la figure 2, les principales étapes mises en oeuvre par un terminal 21 et une entité d'un réseau de communication, par exemple une station de base 22 selon un mode de réalisation de l'invention.

Classiquement, la station de base 22 diffuse 221 des informations système dans le réseau. De telles informations système peuvent être diffusées périodiquement, et portent notamment un signal de synchronisation (par exemple de type SSB « Synchronisation Signal Block ») permettant notamment aux terminaux souhaitant accéder au réseau de se synchroniser avec la station de base.

Selon l'invention, les informations système sont modifiées et comprennent une identification d'au moins une ressource temps-fréquence apte à porter une information relative à un identifiant unique de terminal.

Lorsque le terminal 21 sort du mode veille ou entre dans une zone de couverture de la station de base 22, il peut donc recevoir 211 les informations système diffusées par la station de base 22, et se synchroniser avec la station de base pour les liaisons descendantes.

Le terminal 21 peut alors transmettre 212 à la station de base une requête d'accès au réseau. Une telle requête d'accès porte notamment une première information représentative d'un identifiant unique du terminal. Selon l'invention, la première information représentative d'un identifiant unique du terminal est transmise sur au moins une desdites ressources temps-fréquence identifiées à partir des informations système et donc réservées par le réseau, dite ressource spécifique.

La station de base 22 observe un canal montant, par exemple le canal RACH, et vérifie 222 si la première information représentative d'un identifiant unique du terminal a été reçue sur une desdites ressources temps-fréquence réservées par le réseau.

En cas de vérification positive, la station de base transmet 223 au terminal une réponse portant une deuxième information représentative de l'identifiant unique du terminal.

Le terminal 21 vérifie 213 si une réponse à la requête d'accès a été reçue.

En cas de vérification positive, et plus précisément en cas de réception d'une réponse à la requête d'accès portant une deuxième information représentative de l'identifiant unique du terminal, le terminal considère qu'il a été autorisé à accéder au réseau.

S'il ne souhaite pas poursuivre la procédure de configuration et la phase de communication, il peut passer en mode veille. Sinon, il peut rester en mode actif.

### 5.2 Description d'un mode de réalisation particulier

On présente ci-après un exemple de mise en oeuvre de l'invention, selon lequel la requête d'accès porte une première information représentative d'un identifiant unique du terminal, ainsi qu'un message utile, destiné à être transmis à un autre terminal.

En particulier, un tel message utile peut être un message court, i.e. présentant une taille de l'ordre de quelques bits ou kilobits.

Selon cet exemple, on considère que les informations système, fournies par le réseau, identifient une ou plusieurs ressources temps-fréquence aptes à porter un préambule, notées RACH_O, ainsi que, pour chaque ressource RACH_O, une ou plusieurs ressources temps-fréquence aptes à porter une information relative à un identifiant unique de terminal, notées TFR. De plus, selon cet exemple, les ressources TFR sont également aptes à porter un message utile. Par exemple, trois ressources TFR1-1, TFR1-2 et TFR1-3 sont associées à une première ressource RACH_O1, deux ressources TFR2-1 et TFR2-2 sont associées à une deuxième ressource RACH_O2, etc.

Les différentes ressources TFR associées à une ressource RACH_O peuvent être réservées pour transmettre des messages utiles de tailles différentes, en plus de l'identifiant unique du terminal. La ressource TFR1-1 peut être réservée pour transmettre des messages utiles de petite taille, par exemple inférieure à 10 bits (générés par exemple dans le cadre d'applications avec un faible débit : données issues d'un capteur, communication M2M (« Machine-to-Machine »), etc). La ressource TFR1-2 peut être réservée pour transmettre des messages utiles de taille moyenne, par exemple comprise entre 10 bits et 100 bits (générés par exemple dans le cadre d'applications avec un débit moyen : Facebook, Twitter - marques déposées, etc). La ressource TFR1-3 peut être réservée pour transmettre des messages utiles de grande taille, par exemple supérieurs à 100 bits (générés par exemple dans le cadre d'applications avec un débit élevé).

Les informations système peuvent également porter des informations de modulation et codage, MCS, associées à chaque ressource TFR.

De plus, les informations système peuvent porter une information relative à un nombre maximal de décalage cyclique que le terminal est autorisé à appliquer à une séquence de base prédéfinie.

Comme indiqué en relation avec la figure 2, à réception des informations système, le terminal peut transmettre une requête d'accès à la station de base, au cours d'une première phase.

Pour ce faire, il sélectionne un préambule, par exemple parmi un groupe de préambules classiquement utilisés dans la procédure RACH, et une ressource RACH_O parmi les ressources RACH_O identifiées dans les informations système. Par exemple, il sélectionne la ressource RACH_01.

Le terminal doit ensuite sélectionner une ressource TFR, parmi les ressources TFR associées à la ressource RACH_O1. S'il souhaite transmettre uniquement son identifiant unique, il peut sélectionner aléatoirement une ressource TFR parmi les ressources TFR associées à la ressource RACH_O1. S'il souhaite transmettre son identifiant et un message utile, il peut sélectionner une ressource TFR en tenant compte de la taille du message utile qu'il souhaite transmettre. Par exemple, si le message utile à transmettre présente une taille égale à 20 bits, le terminal sélectionne la ressource TFR1-2.

A partir des informations système, le terminal peut également obtenir le schéma de modulation et codage à utiliser pour transmettre le message utile sur la ressource TFR1-2. On note que si les informations système identifient plusieurs ressources TFR, une ou plusieurs ressources TFR peuvent être utilisées pour transmettre d'une part l'identifiant unique du terminal et d'autre part le message utile. Si les informations système identifient une seule ressource TFR, l'identifiant unique du terminal et le message utile sont transmis sur la même ressource TFR.

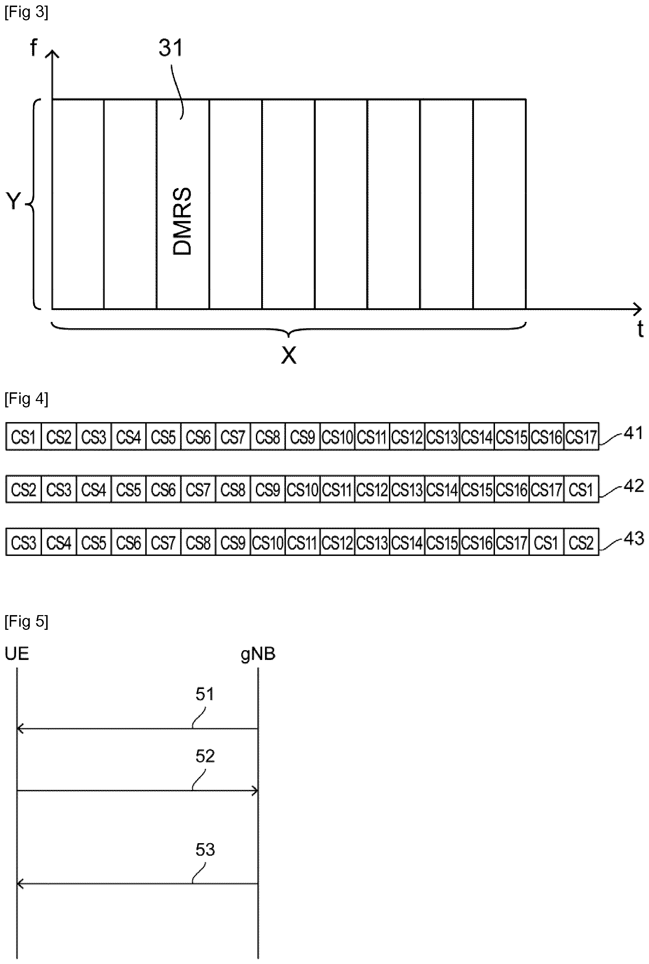

Par exemple, la ressource TFR1-2 réserve un bloc comprenant X intervalles de temps et Y fréquences porteuses. Comme illustré en figure 3, la ressource TFR1-2 peut porter une succession temporelle de X symboles OFDM, chaque symbole OFDM portant des données modulées par Y blocs de ressources en fréquence.

Selon l'exemple illustré en figure 3, le troisième symbole OFDM 31 porte un signal de référence, par exemple de type DMRS, modulé par Y fréquences porteuses.

Classiquement, un tel signal de référence porte une séquence de base connue du terminal et de la station de base. Par exemple, une telle séquence de base est normalisée.

Selon un mode de réalisation de l'invention, le signal de référence porte une version de la séquence de base après décalage cyclique.

En effet, comme les ressources spécifiques ne sont pas réservées pour un terminal particulier, mais peuvent être utilisées par n'importe quel terminal souhaitant accéder au réseau, il est possible qu'une même ressource soit simultanément utilisée par plusieurs terminaux. Le décalage cyclique apporté à la séquence de base permet notamment à la station de base de différentier les différents terminaux.

En particulier, le décalage appliqué à la séquence de base est déterminé en fonction de l'identifiant unique du terminal.

Ainsi, la séquence de base peut être décomposée en N portions égales, avec N le nombre de décalages cycliques autorisés, défini dans les informations système. Le nombre de décalages cycliques à appliquer à la séquence de base pour obtenir le signal de référence est donc égal à l'identifiant du terminal UE_ID, modulo N : mod(UE_ID, N).

Selon l'exemple illustré en figure 4, la séquence de base 41 peut être décomposée en 17 portions égales, avec 17 le nombre de décalages cycliques autorisés défini dans les informations système.

Si l'identifiant unique du terminal est égal à 1, on applique un décalage cyclique à la séquence de base, et on obtient une première version de la séquence de base décalée cycliquement 42.

Si l'identifiant unique du terminal est égal à 2, on applique deux décalages cycliques à la séquence de base, et on obtient une deuxième version de la séquence de base décalée cycliquement 43.

Si l'identifiant unique du terminal est égal à 55, on applique quatre décalages cycliques à la séquence de base (mod (55,17)=4).

Selon ce dernier exemple, comme l'identifiant unique du terminal est supérieur à N, le terminal peut aussi transmettre à la station de base la valeur restante correspondant à la partie entière du rapport entre l'identifiant unique et le nombre maximal de décalage cyclique, i.e. la valeur 3 selon l'exemple ci-dessus.

Cette valeur restante peut notamment être transmise sur un symbole OFDM de la ressource TFR1-2 par exemple.

Grâce au décalage cyclique de la séquence de base, et à cette valeur restante, le terminal peut transmettre une première information représentative de son identifiant unique à la station de base.

Le terminal peut ainsi transmettre la requête d'accès portant le préambule, la première information représentative de l'identifiant unique du terminal et le message utile, à la station de base. Cette étape correspond à l'étape 212 de la figure 2.

Selon l'exemple décrit ci-dessus, le préambule peut être transmis sur la ressource RACH_O1, et la première information représentative de l'identifiant unique du terminal et le message utile peuvent être transmis sur la ressource TFR1-2. En particulier, les données portées par la ressource TFR1-2 peuvent être codées en utilisant un identifiant RA-RNTI, associé à la ressource RACH_O1. Plus généralement, les données transmises sur les ressources spécifiques peuvent être codées en utilisant un identifiant RA-RNTI.

Selon un mode de réalisation particulier, la requête d'accès peut également porter un indicateur indiquant si le terminal souhaite passer en mode veille à réception d'une réponse à la requête d'accès, ou souhaite continuer la phase d'attachement, par exemple par la mise en oeuvre du protocole RCC. Cet indicateur peut notamment être transmis sur la ressource TFR1-2, sur la ressource RACH_O1, ou sur une autre ressource temps-fréquence. En variante, au moins deux types de préambule sont définis, un premier type de préambule à utiliser lorsque le terminal souhaite passer en mode veille après avoir accédé au canal, un deuxième type de préambule à utiliser lorsque le terminal souhaite poursuivre la procédure de configuration après avoir accédé au canal. Selon cette variante, l'indicateur est donc le type du préambule sélectionné. Selon encore une autre variante, l'absence de message utile dans la requête d'accès signifie que le terminal souhaite rester en mode actif. La présence ou l'absence d'un message utile peut donc servir d'indicateur.

En particulier, si le terminal ne transmet que ponctuellement des messages utiles, par exemple parce qu'il utilise une application de type messagerie instantanée, cet indicateur peut automatiquement être positionné à une valeur indiquant que le terminal souhaite passer en mode veille à réception d'une réponse à la requête d'accès.

A l'inverse, si le terminal transmet régulièrement des messages utiles, l'indicateur peut indiquer que le terminal souhaite rester en mode actif à réception d'une réponse à la requête d'accès.

Après transmission de la requête d'accès, le terminal reste en attente d'une réponse de la part de la station de base. Il écoute donc un canal descendant dédié, par exemple le PDCCH (en anglais « physical downlink control channel », durant un intervalle de temps prédéterminé, encore appelée fenêtre RAR.

Au cours d'une deuxième phase, la station de base traite donc la requête d'accès et peut transmettre une réponse au terminal pour l'informer s'il est autorisé ou non à accéder au réseau, i.e. si la requête d'accès a bien été reçue, ou l'informer d'un éventuel conflit.

En particulier, une telle réponse peut être codée en utilisant un identifiant RA-RNTI, associé à la ressource RACH_O1 selon l'exemple précédent. De cette façon, seul le terminal ayant utilisé la ressource RACH_O1 pour la transmission du préambule peut décoder la réponse de la station de base.

On décrit ci-après le traitement mis en oeuvre par la station de base.

La station de base écoute un canal montant, par exemple le canal RACH, et vérifie si un préambule a été reçu sur une ressource dédiée, connue de la station de base (par exemple RACH_O1, RACH_O2). Si un préambule a été détecté (par exemple sur la ressource RACH_O1), elle vérifie si un identifiant unique du terminal a été reçu sur au moins une ressource spécifique associée à la ressource dédiée portant le préambule détecté (par exemple les ressources TFR1-1, TFR1-2, TFR1-3).

On distingue différents cas selon que la station de base a reçu entièrement, partiellement ou n'a pas reçu la requête d'accès.

Selon un premier cas, illustré en figure 5, on considère que le terminal UE a reçu les informations système 51 diffusées par la station de base, par exemple gNB, et a transmis une requête d'accès 52 portant un préambule, un message utile et une première information représentative de l'identifiant unique du terminal.

En reprenant l'exemple précédent, la station de base reçoit le préambule sur la ressource RACH_01, et le message utile et la première information représentative de l'identifiant unique du terminal sur la ressource TFR1-2. A réception du signal de référence transmis sur la ressource TFR1-2, la station de base peut déterminer le nombre de décalages cycliques appliqués à la séquence de base, i.e. 4, puisqu'elle connaît la séquence de base. La station de base reçoit également la valeur restante. Connaissant cette valeur restante, i.e. 3, le nombre de décalages cycliques appliqués à la séquence de base, i.e. 4, et le nombre de décalages cycliques maximum autorisé, i.e. 17, la station de base peut déterminer l'identifiant unique du terminal (3*17+4 = 55).

La station de base peut alors envoyer au terminal une réponse 53 portant une information représentative du préambule transmis sur la ressource RACH_O1, par exemple PID, et une deuxième information représentative de l'identifiant unique du terminal. Selon l'exemple ci-dessus, la deuxième information représentative de l'identifiant du terminal est 55 (UE_ID).

Lorsque le terminal reçoit la réponse 53 pendant la fenêtre RAR, s'il détecte que l'information représentative du préambule PID correspond bien au préambule qu'il a sélectionné pour la requête d'accès, et que la deuxième information représentative de l'identifiant unique du terminal correspond bien à son identifiant unique, il considère que l'accès au réseau a été autorisé. En d'autres termes, cela signifie que la station de base a correctement identifié le terminal et reçu le message utile. Le message utile est donc désormais pris en charge par le réseau et peut être transmis au terminal destinataire.

Selon ce premier cas, contrairement à la procédure RACH classique, le paramètre TA n'est pas transmis de la station de base vers le terminal. Toutefois, la station de base connaît la valeur de ce paramètre.

En particulier, si la requête d'accès porte un indicateur indiquant un retour au mode veille suite à l'autorisation d'accès au réseau, le terminal peut passer en mode veille, par exemple s'il n'a pas de nouveaux messages utiles à transmettre dans un intervalle de temps prédéfini suivant la réception de la réponse à la requête d'accès (par exemple 2 minutes).

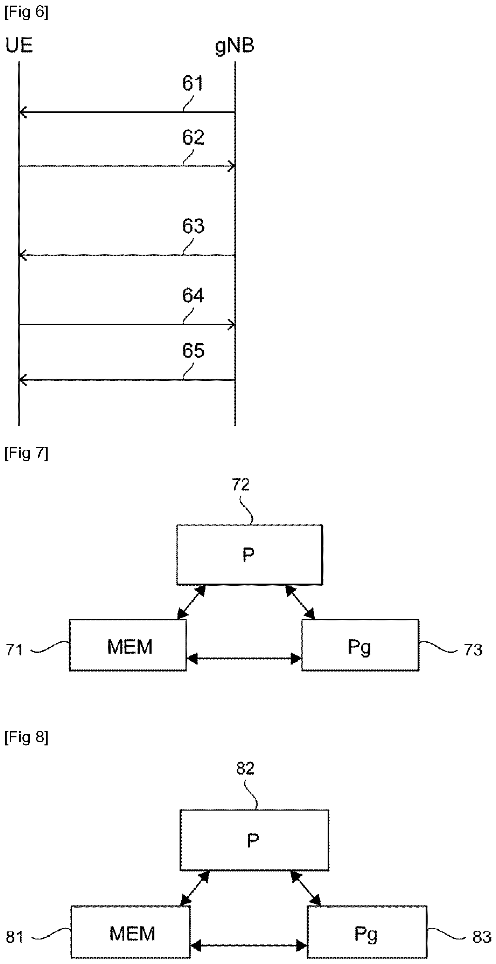

Selon un deuxième cas, illustré en figure 6, on considère que le terminal UE a reçu les informations système 61 diffusées par la station de base, par exemple gNB, et a transmis une requête d'accès 62 portant un préambule, un message utile et une première information représentative de l'identifiant unique du terminal.

En revanche, en reprenant l'exemple précédent, la station de base reçoit uniquement le préambule sur la ressource RACH_01, mais ne reçoit pas le message utile et/ou la première information représentative de l'identifiant unique du terminal sur la ressource TFR1-2 (par exemple suite à un problème de transmission sur cette ressource temps-fréquence, un problème de décodage, un problème de synchronisation, etc).

La station de base peut alors envoyer au terminal une réponse 63 portant une information représentative du préambule, par exemple PID, et identifiant au moins une nouvelle ressource temps-fréquence (par exemple sous la forme du paramètre « UL grant ») pour que le terminal puisse retransmettre la première information représentative de son identifiant unique, ainsi que le message utile selon cet exemple de mise en oeuvre. De plus, une telle réponse peut éventuellement porter d'autres paramètres classiquement utilisés dans la procédure RACH, comme les paramètres TA et TC-RNTI. De tels paramètres peuvent être transmis dans la réponse, ou dans un message distinct.

Lorsque le terminal reçoit la réponse 63 pendant la fenêtre RAR, s'il détecte que l'information représentative du préambule PID correspond bien au préambule qu'il a sélectionné pour la requête d'accès, mais qu'il ne détecte pas de deuxième information représentative de l'identifiant unique du terminal, il considère que la station de base a uniquement reçu le préambule, mais pas le message utile et/ou la première information représentative de l'identifiant unique du terminal.

Le terminal doit donc retransmettre 64 le message utile et la première information représentative de l'identifiant unique du terminal.

Pour ce faire, le terminal utilise la nouvelle ressource temps-fréquence spécifique identifiée dans la réponse. Le paramètre TA peut être utilisé par le terminal pour ajuster son instant d'émission du message utile et de la première information représentative de l'identifiant unique du terminal, et ainsi faciliter la synchronisation avec la station de base.

En particulier, le message utile et la première information représentative de l'identifiant unique du terminal peuvent être codés en utilisant l'identifiant temporaire TC-RNTI généré par la station de base.

Comme le message utile et de la première information représentative de l'identifiant unique du terminal sont transmis sur une nouvelle ressource temps-fréquence, spécifiquement allouée au terminal pour cette transmission par la station de base, la probabilité que la station de base reçoive le message utile et de la première information est plus élevée.

La station de base peut alors répondre 65 avec un message de confirmation si elle a bien reçu le message utile et de la première information représentative de l'identifiant unique du terminal. Dans ce cas, le terminal considère que l'accès au réseau a été autorisé, i.e. que la station de base a correctement identifié le terminal et reçu le message utile.

Sinon, la station de base peut répondre avec un message d'erreur. Dans ce cas, le terminal doit recommencer la procédure d'accès, et transmettre une nouvelle requête d'accès.

Selon un troisième cas, non illustré, on considère que le terminal UE a reçu les informations système diffusées par la station de base gNB, et a transmis une requête d'accès portant un préambule, un message utile et une première information représentative de l'identifiant unique du terminal.

En revanche, le terminal n'a pas reçu de réponse à la requête d'accès durant la fenêtre RAR. Dans ce cas, le terminal considère que la procédure d'accès a échoué. Le terminal doit donc recommencer la procédure d'accès et transmettre une nouvelle requête d'accès.

Dans l'exemple ci-dessus, on a considéré la transmission d'une requête d'accès portant un préambule, une première information représentative de l'identifiant unique du terminal, et un message utile, à titre illustratif. On rappelle toutefois que seule la transmission de la première information représentative de l'identifiant unique du terminal sur une ressource temps-fréquence identifiée par les informations système est nécessaire pour que le terminal puisse accéder rapidement au réseau, comme illustré en figure 2. La transmission du préambule et la transmission du message utile sont toutes les deux facultatives.

En particulier, l'utilisation d'un préambule permet à la station de base de détecter qu'un terminal est entré dans le réseau. Toutefois, d'autres techniques peuvent être mises en oeuvre, notamment la simple transmission, par le terminal, de son identifiant unique.

Par ailleurs, on a considéré dans l'exemple ci-dessus la transmission du préambule sur la ressource RACH_O1, et de la première information représentative de l'identifiant unique du terminal sur la ressource TFR1-2. On note que la première information représentative de l'identifiant unique du terminal, ainsi qu'éventuellement le message utile, peuvent être transmis sur la ressource RACH_O1, si la taille de la ressource temps-fréquence réservée par le réseau est suffisante.

### 5.3 Dispositifs

On présente finalement, en relation avec les figures 7 et 8, les structures simplifiées d'un terminal et d'une entité du réseau, par exemple une station de base, selon au moins un mode de réalisation décrit ci-dessus.

Comme illustré en figure 7, un terminal selon au moins un mode de réalisation de l'invention comprend au moins une mémoire 71 et au moins une unité de traitement 72, équipée par exemple d'une machine de calcul programmable ou d'une machine de calcul dédiée, par exemple un processeur P, et pilotée par le programme d'ordinateur 73, mettant en oeuvre des étapes du procédé d'accès à un réseau de communication selon au moins un mode de réalisation de l'invention.

A l'initialisation, les instructions de code du programme d'ordinateur 73 sont par exemple chargées dans une mémoire RAM avant d'être exécutées par le processeur de l'unité de traitement 72.

Le processeur de l'unité de traitement 72 met en oeuvre des étapes du procédé de d'accès à un réseau de communication, selon les instructions du programme d'ordinateur 73, pour :
- recevoir des informations système diffusées par le réseau de communication auquel le terminal souhaite accéder, les informations système comprenant une identification d'au moins une ressource temps-fréquence apte à porter une information relative à un identifiant unique de terminal,
- transmettre au réseau une requête d'accès, ladite requête d'accès portant une première information représentative d'un identifiant unique dudit terminal, transmise sur une desdites ressources temps-fréquence identifiées à partir desdites informations système, dite ressource spécifique,
- recevoir une réponse à ladite requête d'accès, l'accès du terminal audit réseau étant autorisé en cas de réception d'une réponse à ladite requête d'accès portant une deuxième information représentative de l'identifiant unique dudit terminal.

Comme illustré en figure 8, une station de base selon au moins un mode de réalisation de l'invention comprend au moins une mémoire 81 et au moins une unité de traitement 82, équipée par exemple d'une machine de calcul programmable ou d'une machine de calcul dédiée, par exemple un processeur P, et pilotée par le programme d'ordinateur 83, mettant en oeuvre des étapes du procédé d'attachement au réseau selon au moins un mode de réalisation de l'invention.

A l'initialisation, les instructions de code du programme d'ordinateur 83 sont par exemple chargées dans une mémoire RAM avant d'être exécutées par le processeur de l'unité de traitement 82.

Le processeur de l'unité de traitement 82 met en oeuvre des étapes du procédé d'attachement au réseau décrit précédemment, selon les instructions du programme d'ordinateur 83, pour :
- diffuser des informations système comprenant une identification d'au moins une ressource temps-fréquence apte à porter une information relative à un identifiant unique de terminal,
- vérifier la réception, sur au moins une desdites ressources temps-fréquence identifiées à partir desdites informations système, dite ressource spécifique, d'une première information représentative d'un identifiant unique dudit terminal, portée par une requête d'accès audit réseau,
- transmettre audit terminal une réponse à ladite requête d'accès portant une deuxième information représentative de l'identifiant unique dudit terminal, si ladite première information représentative d'un identifiant unique dudit terminal est reçue.

## Revendications

1. Procédé d'accès à un réseau de communication, mis en oeuvre par un terminal, comprenant :
- la réception (211) d'informations système diffusées par ledit réseau, les informations système comprenant une identification d'au moins une ressource temps-fréquence apte à porter une information relative à un identifiant unique de terminal,
- la transmission (212) audit réseau d'une requête d'accès, ladite requête d'accès portant :
une première information représentative d'un identifiant unique dudit terminal transmise sur au moins une desdites ressources temps-fréquence identifiées à partir desdites informations système, dite ressource spécifique,
un message utile, transmis sur ladite ressource spécifique ou sur au moins une ressource temps-fréquence apte à porter un message utile, identifiée à partir desdites informations système,
- l'autorisation (213) d'accès audit réseau en cas de réception d'une réponse à ladite requête d'accès portant une deuxième information représentative de l'identifiant unique dudit terminal.

2. Procédé selon la revendication 1, selon lequel, lesdites informations système identifiant au moins deux ressources temps-fréquence aptes à porter le message utile, ledit procédé met en oeuvre la sélection d'au moins une desdites ressources temps-fréquence tenant compte de la taille dudit message utile.

3. Procédé selon l'une quelconque des revendications 1 et 2, selon lequel, l'identifiant unique dudit terminal étant un nombre entier, ladite transmission transmet également un signal de référence obtenu en appliquant un décalage cyclique à une séquence de base prédéfinie, déterminé en fonction de l'identifiant unique dudit terminal.

4. Procédé selon la revendication 3, selon lequel, lorsque l'identifiant unique dudit terminal est supérieur à un nombre maximal de décalage cyclique, ladite première information représentative de l'identifiant unique dudit terminal comprend la partie entière du rapport entre l'identifiant unique et le nombre maximal de décalage cyclique,
le nombre maximal de décalage cyclique étant obtenu à partir desdites informations système.

5. Procédé selon l'une quelconque des revendications 1 à 4, selon lequel ladite requête d'accès porte également au moins un indicateur indiquant un retour au mode veille dudit terminal suite à l'autorisation d'accès audit réseau.

6. Procédé selon l'une quelconque des revendications 1 à 5, selon lequel ladite requête d'accès porte également un préambule sélectionné parmi une pluralité de préambules, transmis sur ladite ressource spécifique ou sur une ressource temps-fréquence apte à porter le préambule, identifiée à partir desdites informations système,
selon lequel l'autorisation d'accès audit réseau est accordée lorsque ladite réponse à la requête d'accès porte la deuxième information représentative de l'identifiant unique dudit terminal et une information représentative dudit préambule sélectionné
et selon lequel, en cas de réception d'une réponse à ladite requête d'accès ne portant pas de deuxième information représentative de l'identifiant unique dudit terminal, ledit procédé comprend la retransmission de ladite requête d'accès, ladite première information représentative de l'identifiant unique du terminal étant transmise sur une nouvelle ressource temps-fréquence spécifique identifiée dans ladite réponse.

7. Procédé selon l'une quelconque des revendications 1 à 6, selon lequel ledit message utile est un message de type messagerie instantanée.

8. Procédé selon l'une quelconque des revendications 1 à 7, selon lequel ladite première information et/ou ledit message utile sont transmis audit réseau en tenant compte d'une information de modulation et codage associée à la ressource temps-fréquence correspondante, ladite information de modulation et codage étant obtenue à partir desdites informations système.

9. Procédé d'attachement d'un terminal à un réseau de communication, comprenant :
- la diffusion (221) d'informations système par ledit réseau, les informations système comprenant une identification d'au moins une ressource temps-fréquence apte à porter une information relative à un identifiant unique de terminal,
- la vérification (222) de la réception, sur au moins une desdites ressources temps-fréquence identifiée à partir desdites informations système, dite ressource spécifique, d'une première information représentative d'un identifiant unique dudit terminal, portée par une requête d'accès audit réseau, et vérification de la réception, sur ladite ressource spécifique ou sur au moins une ressource temps-fréquence apte à porter un message utile, identifiée à partir desdites informations système, d'un message utile,
- si ladite première information représentative d'un identifiant unique dudit terminal et ledit message utile sont reçus, la transmission (223) audit terminal d'une réponse à ladite requête d'accès portant une deuxième information représentative de l'identifiant unique dudit terminal et la transmission dudit message utile.

10. Procédé selon la revendication 9, comprenant également :
- la vérification de la réception, sur ladite ressource spécifique ou sur au moins une ressource temps-fréquence apte à porter un préambule, identifiée à partir desdites informations système, d'un préambule porté par ladite requête d'accès,
- si ledit préambule est reçu, et que ladite première information représentative d'un identifiant dudit terminal n'est pas reçue, la transmission audit terminal d'une réponse à ladite requête d'accès portant une information représentative dudit préambule et identifiant une nouvelle ressource temps-fréquence spécifique.

11. Procédé selon l'une quelconque des revendications 1 à 10, **caractérisé en ce que** ledit message utile est destiné à être transmis à au moins un autre terminal.

12. Terminal comprenant au moins une unité de traitement configurée pour :
- recevoir (211) des informations système diffusées par un réseau de communication auquel le terminal souhaite accéder, les information système comprenant une identification d'au moins une ressource temps-fréquence apte à porter une information relative à un identifiant unique de terminal,
- transmettre (212) audit réseau une requête d'accès audit réseau, ladite requête d'accès portant :
une première information représentative d'un identifiant unique dudit terminal, transmise sur au moins une desdites ressources temps-fréquence identifiées à partir desdites informations système, dite ressource spécifique,
un message utile, transmis sur ladite ressource spécifique ou sur au moins une ressource temps-fréquence apte à porter un message utile, identifiée à partir desdites informations système,
- recevoir (213) une réponse à ladite requête d'accès, l'accès du terminal audit réseau étant autorisé en cas de réception d'une réponse à ladite requête d'accès portant une deuxième information représentative de l'identifiant unique dudit terminal.

13. Station de base d'un réseau de communication, comprenant au moins une unité de traitement configurée pour
- diffuser (221) des informations système comprenant une identification d'au moins une ressource temps-fréquence apte à porter une information relative à un identifiant unique de terminal,
- vérifier (222) la réception, sur au moins une desdites ressources temps-fréquence identifiée à partir desdites informations système, dite ressource spécifique, d'une première information représentative d'un identifiant unique dudit terminal, portée par une requête d'accès audit réseau, et vérifier la réception, sur ladite ressource spécifique ou sur au moins une ressource temps-fréquence apte à porter un message utile, identifiée à partir desdites informations système, d'un message utile,
- transmettre (223) audit terminal une réponse à ladite requête d'accès portant une deuxième information représentative de l'identifiant unique dudit terminal et transmettre ledit message utile, si ladite première information représentative d'un identifiant dudit terminal et ledit message utile sont reçus.

14. Programme d'ordinateur comportant des instructions pour la mise en oeuvre d'un procédé selon l'une quelconque des revendications 1 à 11 lorsque ce programme est exécuté par un processeur.

## Patentansprüche

1. Zugriffsverfahren zu einem Kommunikationsnetzwerk, durchgeführt von einem Endgerät, das enthält:
- den Empfang (211) von vom Netzwerk verbreiteten Systeminformationen, wobei die Systeminformationen eine Identifikation mindestens einer Zeit-Frequenz-Ressource enthalten, die fähig ist, eine Information bezüglich einer eindeutigen Endgerät-Kennung zu tragen,
- die Übertragung (212) einer Zugriffsanforderung an das Netzwerk, wobei die Zugriffsanforderung trägt:
eine für eine eindeutige Kennung des Endgeräts repräsentative erste Information, die auf mindestens einer der ausgehend von den Systeminformationen identifizierten Zeit-Frequenz-Ressourcen übertragen wird, spezifische Ressource genannt,
eine Nutznachricht, die auf der spezifischen Ressource oder auf mindestens einer Zeit-Frequenz-Ressource übertragen wird, die fähig ist, eine Nutznachricht zu tragen, identifiziert ausgehend von den Systeminformationen,
die Zugriffsgenehmigung (213) auf das Netzwerk im Fall des Empfangs einer Antwort auf die Zugriffsanforderung, die eine für die eindeutige Kennung des Endgeräts repräsentative zweite Information trägt.

2. Verfahren nach Anspruch 1, wobei, da die Systeminformationen mindestens zwei Zeit-Frequenz-Ressourcen identifizieren, die fähig sind, die Nutznachricht zu tragen, das Verfahren die Auswahl mindestens einer der Zeit-Frequenz-Ressourcen unter Berücksichtigung der Größe der Nutznachricht durchführt.

3. Verfahren nach einem der Ansprüche 1 und 2, wobei, da die eindeutige Kennung des Endgeräts eine ganze Zahl ist, die Übertragung ebenfalls ein Bezugssignal überträgt, das durch Anwendung einer abhängig von der eindeutigen Kennung des Endgeräts bestimmten zyklischen Verschiebung an eine vordefinierte Basissequenz erhalten wird.

4. Verfahren nach Anspruch 3, wobei, wenn die eindeutige Kennung des Endgeräts größer ist als eine maximale Anzahl zyklischer Verschiebung, die für die eindeutige Kennung des Endgeräts repräsentative erste Information den ganzzahligen Teil des Verhältnisses zwischen der eindeutigen Kennung und der maximalen Anzahl zyklischer Verschiebung enthält,
wobei die maximale Anzahl zyklischer Verschiebung ausgehend von den Systeminformationen erhalten wird.

5. Verfahren nach einem der Ansprüche 1 bis 4, wobei die Zugriffsanforderung ebenfalls mindestens einen Indikator trägt, der eine Rückkehr in den Standby-Modus des Endgeräts nach der Genehmigung des Zugriffs auf das Netzwerk anzeigt.

6. Verfahren nach einem der Ansprüche 1 bis 5, wobei die Zugriffsanforderung ebenfalls eine aus einer Vielzahl von Präambeln ausgewählte Präambel trägt, die auf der spezifischen Ressource oder auf einer Zeit-Frequenz-Ressource übertragen wird, die fähig ist, die Präambel zu tragen, identifiziert ausgehend von den Systeminformationen,
wobei die Genehmigung des Zugriffs auf das Netzwerk erteilt wird, wenn die Antwort auf die Zugriffsanforderung die für die eindeutige Kennung des Endgeräts repräsentative zweite Information und eine für die ausgewählte Präambel repräsentative Information trägt,
und wobei, im Fall des Empfangs einer Antwort auf die Zugriffsanforderung, die keine für die eindeutige Kennung des Endgeräts repräsentative zweite Information trägt, das Verfahren die erneute Übertragung der Zugriffsanforderung enthält, wobei die für die eindeutige Kennung des Endgeräts repräsentative erste Information auf einer in der Antwort identifizierten spezifischen neuen Zeit-Frequenz-Ressource übertragen wird.

7. Verfahren nach einem der Ansprüche 1 bis 6, wobei die Nutznachricht eine Nachricht vom Typ Instant Messaging ist.

8. Verfahren nach einem der Ansprüche 1 bis 7, wobei die erste Information und/oder die Nutznachricht unter Berücksichtigung einer der entsprechenden Zeit-Frequenz-Ressource zugeordneten Modulations- und Codierungsinformation an das Netzwerk übertragen werden, wobei die Modulations- und Codierungsinformation ausgehend von den Systeminformationen erhalten wird.

9. Verfahren zur Anbindung eines Endgeräts an ein Kommunikationsnetzwerk, das enthält:
- die Verbreitung (221) von Systeminformationen durch das Netzwerk, wobei die Systeminformationen eine Identifikation mindestens einer Zeit-Frequenz-Ressource enthalten, die fähig ist, eine Information bezüglich einer eindeutigen Endgerät-Kennung zu tragen,
- die Überprüfung (222) des Empfangs, auf mindestens einer der Zeit-Frequenz-Ressourcen, identifiziert ausgehend von den Systeminformationen, spezifische Ressource genannt, einer für eine eindeutige Kennung des Endgeräts repräsentativen ersten Information, getragen von einer Zugriffsanforderung auf das Netzwerk, und Überprüfung des Empfangs einer Nutznachricht auf der spezifischen Ressource oder auf mindestens einer Zeit-Frequenz-Ressource, die fähig ist, eine Nutznachricht zu tragen, identifiziert ausgehend von den Systeminformationen,
- wenn die für eine eindeutige Kennung des Endgeräts repräsentative erste Information und die Nutznachricht empfangen werden, die Übertragung (223) einer Antwort auf die Zugriffsanforderung an das Endgerät, die eine für die eindeutige Kennung des Endgeräts repräsentative zweite Information trägt, und die Übertragung der Nutznachricht.

10. Verfahren nach Anspruch 9, das ebenfalls enthält:
- die Überprüfung des Empfangs einer von der Zugriffsanforderung getragenen Präambel auf der spezifischen Ressource oder auf mindestens einer Zeit-Frequenz-Ressource, die fähig ist, eine Präambel zu tragen, identifiziert ausgehend von den Systeminformationen,
- wenn die Präambel empfangen wird, und wenn die für eine Kennung des Endgeräts repräsentative erste Information nicht empfangen wird, die Übertragung einer Antwort auf die Zugriffsanforderung an das Endgerät, die eine für die Präambel repräsentative Information trägt und eine neue spezifische Zeit-Frequenz-Ressource identifiziert.

11. Verfahren nach einem der Ansprüche 1 bis 10, **dadurch gekennzeichnet, dass** die Nutznachricht dazu bestimmt ist, an mindestens ein anderes Endgerät übertragen zu werden.

12. Endgerät, das mindestens eine Verarbeitungseinheit enthält, die konfiguriert ist:
- Systeminformationen zu empfangen (211), die von einem Kommunikationsnetzwerk verbreitet werden, auf das das Endgerät zugreifen möchte, wobei die Systeminformationen eine Identifikation mindestens einer Zeit-Frequenz-Ressource enthalten, die fähig ist, eine Information bezüglich einer eindeutigen Endgerät-Kennung zu tragen,
- an das Netzwerk eine Zugriffsanforderung auf das Netzwerk zu übertragen (212), wobei die Zugriffsanforderung trägt:
eine für eine eindeutige Kennung des Endgeräts repräsentative erste Information, die auf mindestens einer der ausgehend von den Systeminformationen identifizierten Zeit-Frequenz-Ressourcen, spezifische Ressource genannt, übertragen wird,
eine Nutznachricht, die auf der spezifischen Ressource oder auf mindestens einer Zeit-Frequenz-Ressource, die fähig ist, eine Nutznachricht zu tragen, identifiziert ausgehend von den Systeminformationen, übertragen wird,
- eine Antwort auf die Zugriffsanforderung zu empfangen (213), wobei der Zugriff des Endgeräts auf das Netzwerk im Fall des Empfangs einer Antwort auf die Zugriffsanforderung genehmigt wird, die eine für die eindeutige Kennung des Endgeräts repräsentative zweite Information trägt.

13. Basisstation eines Kommunikationsnetzwerks, die mindestens eine Verarbeitungseinheit enthält, die konfiguriert ist,
- Systeminformationen zu verbreiten (221), die eine Identifikation mindestens einer Zeit-Frequenz-Ressource enthalten, die fähig ist, eine Information bezüglich einer eindeutigen Endgerät-Kennung zu tragen,
- den Empfang, auf mindestens einer der Zeit-Frequenz-Ressourcen, identifiziert ausgehend von den Systeminformationen, spezifische Ressource genannt, einer für eine eindeutige Kennung des Endgeräts repräsentativen ersten Information, getragen von einer Zugriffsanforderung auf das Netzwerk, zu überprüfen (222), und den Empfang einer Nutznachricht auf der spezifischen Ressource oder auf mindestens einer Zeit-Frequenz-Ressource zu überprüfen, die fähig ist, eine Nutznachricht zu tragen, identifiziert ausgehend von den Systeminformationen,
- an das Endgerät eine Antwort auf die Zugriffsanforderung zu übertragen (223), die eine für die eindeutige Kennung des Endgeräts repräsentative zweite Information trägt, und die Nutznachricht zu übertragen, wenn die für eine Kennung des Endgeräts repräsentative erste Information und die Nutznachricht empfangen werden.

14. Computerprogramm, das Anweisungen zur Durchführung des Verfahrens nach einem der Ansprüche 1 bis 11 aufweist, wenn dieses Programm von einem Prozessor ausgeführt wird.

## Claims

1. Method for accessing a communication network, implemented by a terminal, comprising:
- the reception (211) of system information broadcast by said network, the system information comprising an identification of at least one time-frequency resource capable of carrying a piece of information relative to a unique terminal identifier,
- the transmission (212) to said network of an access request, said access request carrying:
a first piece of information representative of a unique identifier of said terminal, transmitted on at least one of said time-frequency resources identified on the basis of said system information, called specific resource,
a useful message, transmitted on said specific resource or on at least one time-frequency resource capable of carrying a useful message, identified on the basis of said system information,
- the authorization (213) of access to said network in the case of reception of a response to said access request carrying a second piece of information representative of the unique identifier of said terminal.

2. Method according to Claim 1, according to which, since said system information identifies at least two time-frequency resources capable of carrying the useful message, said method implements the selection of at least one of said time-frequency resources while taking into account the size of said useful message.

3. Method according to either one of Claims 1 and 2, according to which, since the unique identifier of said terminal is an integer, said transmission also transmits a reference signal obtained by applying a cyclical offset to a predefined base sequence, determined according to the unique identifier of said terminal.

4. Method according to Claim 3, according to which, when the unique identifier of said terminal is greater than a maximum number of cyclical offset, said first piece of information representative of the unique identifier of said terminal comprises the whole part of the ratio between the unique identifier and the maximum number of cyclical offset,
the maximum number of cyclical offset being obtained on the basis of said system information.

5. Method according to any one of Claims 1 to 4, according to which said access request also carries at least one indicator indicating a return to standby mode of said terminal after the authorization of access to said network.

6. Method according to any one of Claims 1 to 5, according to which said access request also carries a preamble selected from a plurality of preambles, transmitted on said specific resource or on a time-frequency resource capable of carrying the preamble, identified on the basis of said system information,
according to which the authorization of access to said network is granted when said response to the access request carries the second piece of information representative of the unique identifier of said terminal and a piece of information representative of said selected preamble
and according to which, in the case of reception of a response to said access request not carrying a second piece of information representative of the unique identifier of said terminal, said method comprises the retransmission of said access request, said first piece of information representative of the unique identifier of the terminal being transmitted on a new specific time-frequency resource identified in said response.

7. Method according to any one of Claims 1 to 6, according to which said useful message is a message of the instant messaging type.

8. Method according to any one of Claims 1 to 7, according to which said first piece of information and/or said useful message are transmitted to said network while taking into account a piece of information on modulation and coding associated with the corresponding time-frequency resource, said piece of information on modulation and coding being obtained on the basis of said system information.

9. Method for attachment of a terminal to a communication network, comprising:
- the broadcasting (221) of system information by said network, the system information comprising an identification of at least one time-frequency resource capable of carrying a piece of information relative to a unique terminal identifier,
- the verification (222) of the reception, on at least one of said time-frequency resources identified on the basis of said system information, called specific resource, of a first piece of information representative of a unique identifier of said terminal, carried by a request for access to said network, and verification of the reception, on said specific resource or on at least one time-frequency resource capable of carrying a useful message, identified on the basis of said system information, of a useful message,
- if said first piece of information representative of a unique identifier of said terminal and said useful message are received, the transmission (223) to said terminal of a response to said access request, carrying a second piece of information representative of the unique identifier of said terminal and the transmission of said useful message.

10. Method according to Claim 9, also comprising:
- the verification of the reception, on said specific resource or on at least one time-frequency resource capable of carrying a preamble, identified on the basis of said system information, of a preamble carried by said access request,
- if said preamble is received, and said first piece of information representative of an identifier of said terminal is not received, the transmission to said terminal of a response to said access request carrying a piece of information representative of said preamble and identifying a new specific time-frequency resource.

11. Method according to any one of Claims 1 to 10, **characterized in that** said useful message is intended to be transmitted to at least one other terminal.

12. Terminal comprising at least one processing unit configured to:
- receive (211) system information broadcast by a communication network that the terminal desires to access, the system information comprising an identification of at least one time-frequency resource capable of carrying a piece of information relative to a unique terminal identifier,
- transmit (212) to said network a request for access to said network, said access request carrying:
a first piece of information representative of a unique identifier of said terminal, transmitted on at least one of said time-frequency resources identified on the basis of said system information, called specific resource,
a useful message, transmitted on said specific resource or on at least one time-frequency resource capable of carrying a useful message, identified on the basis of said system information,
- receive (213) a response to said access request, the access of the terminal to said network being authorized in the case of reception of a response to said access request carrying a second piece of information representative of the unique identifier of said terminal.

13. Base station of a communication network, comprising at least one processing unit configured to
- broadcast (221) system information comprising an identification of at least one time-frequency resource capable of carrying a piece of information relative to a unique terminal identifier,
- verify (222) the reception, on at least one of said time-frequency resources identified on the basis of said system information, called specific resource, of a first piece of information representative of a unique identifier of said terminal, carried by a request for access to said network, and verify the reception, on said specific resource or on at least one time-frequency resource capable of carrying a useful message, identified on the basis of said system information, of a useful message,
- transmit (223) to said terminal a response to said access request carrying a second piece of information representative of the unique identifier of said terminal and transmit said useful message, if said first piece of information representative of an identifier of said terminal and said useful message are received.

14. Computer program including instructions for the implementation of a method according to any one of Claims 1 to 11 when this program is executed by a processor.
